Europäisches Patentamt

European Patent Office

Office européen des brevets

(11) Publication number: **0 256 558**
**A1**

# (12) EUROPEAN PATENT APPLICATION

(21) Application number: 87111999.6

(22) Date of filing: 18.08.87

(51) Int. Cl.⁴: **G02B 6/44** , **H01B 13/32**

(30) Priority: **19.08.86 JP 193798/86**

(43) Date of publication of application:
**24.02.88 Bulletin 88/08**

(84) Designated Contracting States:
**DE FR GB IT SE**

(71) Applicant: **SUMITOMO ELECTRIC INDUSTRIES LIMITED**
**No. 15, Kitahama 5-chome Higashi-ku**
**Osaka-shi Osaka 541(JP)**

(72) Inventor: **Fukuma, Masumi c/o Yokohama Works**
**Sumito Electric Industries Ltd. No. 1, Taya-cho**
**Sakae-ku Yokohama-shi Kanagawa(JP)**
Inventor: **Mizuno, Akira**
**No. 2-1, Aza Higashiura Kitayama-cho**
**Toyohashi-shi Aichi(JP)**

(74) Representative: **Patentanwälte Grünecker, Kinkeldey, Stockmair & Partner**
**Maximilianstrasse 58**
**D-8000 München 22(DE)**

(54) **Method and apparatus of manufacturing water proof optical cable.**

(57) A method and apparatus of manufacturing a waterproof optical cable in which plural optical fibers are wound in a spiral groove of a spacer (7). A water-absorbing swelling material (1) is electrically charged adjacent either the spacer (7) of the winding optical fibers so as to be attracted thereto.

*FIG. 1*

EP 0 256 558 A1

# METHOD AND APPARATUS OF MANUFACTURING WATER PROOF OPTICAL CABLE

## BACKGROUND OF THE INVENTION

### Field of the Invention

The present invention relates to a method of manufacturing a waterproof optical cable. It particularly relates to a method of manufacturing a waterproof optical cable having a property which prevents water from spreading in the cable. This property is the so-called water-exuding prevention property for when water permeates the cable, particularly when an outer coat of the cable is damaged.

### Background of the Invention

Examples of the conventional methods of manufacturing the waterproof optical cable of the kind as described above includes a method of waterproofing a spacer type optical cable having a plurality of coated optical fibers or a lamination of a plurality of tape type coated optical fibers received in each groove of a grooved spacer. In this waterproofing method, a powder of water-absorbing swelling material is put into the groove. To put the powder of water-absorbing swelling material into the groove to make it adhere to the lamination, the powder is sprinkled manually or mechanically.

In the conventional method of sprinkling the powder of water-absorbing swelling material onto the grooved spacer and the tape type coated optical fibers in a manual or a mechanical manner, there are several problems. The sprinkled powder of water-absorbing swelling material is not efficiently applied to the grooved spacer and to the tape type coated optical fibers. The powder unequally adheres. Finally, the powder affects the health safety since it may cause pneumoconiosis or the like when the powder is sprinkled in air.

## SUMMARY OF THE INVENTION

Accordingly, an object of the invention is to solve the above problems in the prior art.

The invention is a method of manufacturing a waterproof optical cable. A plurality of coated optical fibers or a lamination of tape type coated optical fibers and powder of water-absorbing swelling material are received in a plurality of spiral grooves formed in an outer circumference of a rod-like spacer so as to make the optical cable be waterproof. The present invention is characterized in that the powder of water-absorbing swelling material is electrically charged. The electrically charged powder of the water-absorbing swelling material is made to adhere to the coated optical fibers or the lamination of the tape type coated optical fibers and/or the rod-like spacer by means of electrostatic force.

In the method according to the present invention, the powder of water-absorbing swelling material is electrically charged and the electrically charged powder of water-absorbing swelling material is made adhere to the grooved spacer and/or the coated optical fibers or the tape type optical fibers by means of electrostatic force. Accordingly, the powder of water-absorbing swelling material is never sprinkled in the air. Further, because the electrostatic force is used, the powder can be equally applied to the whole of the object being so treated. The applied quantity of the powder can be controlled so as to make the powder adhere efficiently by properly changing the speed of feeding the charged powder and the degree of voltage for electrifying the powder.

## BRIEF DESCRIPTION OF THE DRAWINGS

Fig. I is a schematic view showing an arrangement of an embodiment of the charged-powder application apparatus to be used in the present invention.

Fig. 2 is a schematic view showing an arrangement of another embodiment of the charged-powder application apparatus to be used in the present invention.

Fig. 3 is a schematic view for explaining an embodiment of the method of manufacturing a waterproof optical cable according to the present invention.

Fig. 4 is a cross-section showing a part of structure of a spacer groove of the waterproof optical cable manufactured by way of experiment in the manufacturing method according to the present invention.

Fig. 5 is a view for explaining a water-exuding test in the waterproof optical cable manufactured by way of trial according to the present invention.

## DETAILED DESCRIPTION OF THE PREFERRED EMBODIMENTS

Referring to the drawings, embodiments of the invention will be described hereunder.

Fig. I is a schematic view showing an arrangement of an embodiment of a charged-powder application apparatus used in the present invention. A powder I of water-absorbing swelling material (hereinafter simply referred to "powder") is contained in a hopper 2 which feeds the powder I to a belt conveyer constituted by a belt 4 moved by rollers 3. The belt 4 is made of electric conductor and conveys the powder I to a portion under a spacer 7. The spacer 7 consists of non-conductor material at outer circumference, and includes an electric conductor 8. A voltage is applied to the belt 4 by a voltage power source. An electric conductor 6 is attached to an inner surface of a cover 9 surrounding the belt 4. The cover 9 is formed by an insulating seal and the same voltage as that for the belt 4 is applied to the electric conductor 6 by the voltage power source 5 to prevent the powder I from scattering in all directions. A rigid body 8 provided at a center of the spacer 7 is grounded.

First, the powder I fed from the hopper 2 onto the belt conveyer is conveyed to a portion under the spacer 7 by the belt 4. An opening is formed under the spacer 9 in the cover 9 made of the insulating seal and having the electric conductor 6 attached on its inner surface, so that the belt 4 and the spacer 7 oppose each other through the opening. The same voltage as that applied to the belt 4 is applied to the electric conductor 6 by the voltage power source 5, so that no electrostatic force acts between the belt 4 and the cover 9. When the spacer 7 has an electrical potential lower than that of the belt 4, an electrical potential difference between the spacer 7 and the belt 4 generates an electric field.

In the case in which the powder I is made of a dielectric having a high electrical resistance value, the powder I is polarized by the electric field which has been generated between the spacer 7 and the belt 4 so that positive charges are induced at upper parts of the particles of powder I while negative charges are induced at lower parts of the powder I, that is, on the side of the belt 4. At that time, when the negative charges at the lower parts of the powder I are neutralized by the electrical potential of the belt 4 forming an electrode, electric force is generated so as to attract the powder I toward the spacer 7 to propel the powder I upwards and to make the powder I adhere to the spacer 7.

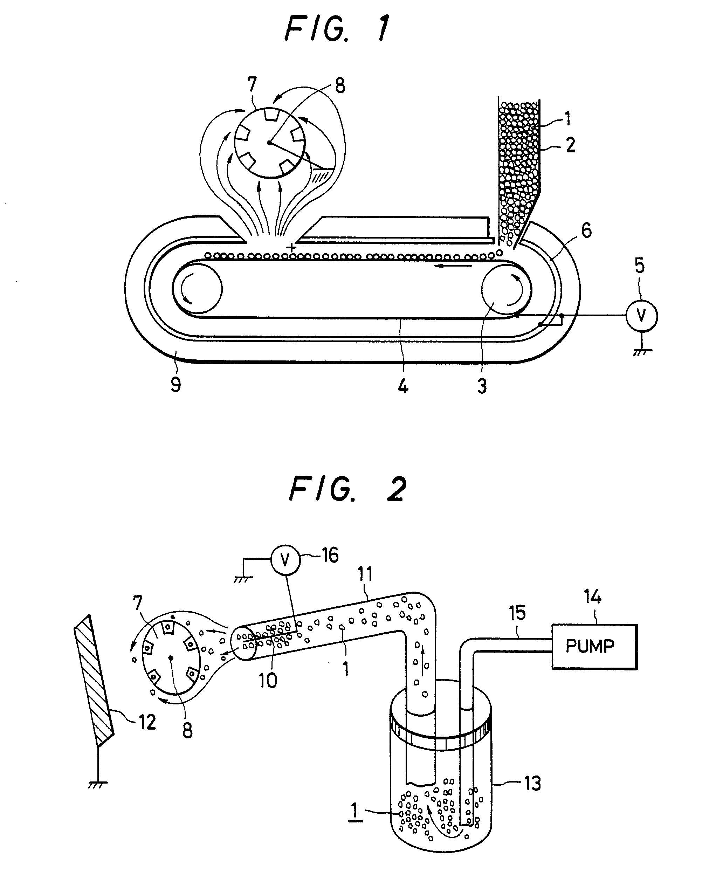

Fig. 2 is a schematic view showing an arrangement of another embodiment of a charged-powder application apparatus used in the present invention. Powder I is mixed in a compressed-air stream I5 fed from a pump I4 in an agitator device I3. The air in the agitator device I3 is sent out together with the powder I through a nozzle II. A needle electrode I0 supplied with a voltage by a voltage power source I6 is located at an intermediate portion of the nozzle II (for example, in the vicinity of a blowing outlet of the nozzle II in the embodiment) so as to electrically charge the powder I. As a result, the charged powder I is sprayed over the spacer 7 so as to adhere to it by electrostatic force. The rigid body 8 is disposed at a central portion of the spacer 7.

In the case where the powder I of water-absorbing swelling material is mixed in the air while feeding the compressed-air stream I5, it is effective to use a gas having low humidity such as dry air or the like to protect the water-absorbing swelling material from external humidity to thereby maintain its quality. In the case where the powder I is charged to make it adhere onto the spacer 7 by means of electrostatic force, it is also effective to widen the adhering region by providing a grounded potential electrode I2 behind the spacer 7 to widen the powder application region. This arrangement is included in the scope of the present invention as an embodiment together with the former technique in which a gas having low humidity such as dry air or the like is used. Further, if the rigid body 8 in the spacer of Fig. 2 is grounded as illustrated in Fig. I, the electrical potential difference between the spacer 7 and the powder I can be increased so as to effectively increase the quantity of the applied powder I with a reduced applied voltage. This arrangement is also included in the scope of the present invention as an embodiment thereof. Being made to adhere to an object by the electrostatic force, the applied powder I sometime peels off from the object, that is, the spacer 7 or a tape type coated optical fiber. Accordingly, it is also effective to previously apply an adhesive over the spacer 7 or the optical fibers, or the like. This arrangement is also included in the scope of the present invention as an embodiment thereof.

Next, an embodiment of the method according to the present invention will be described.

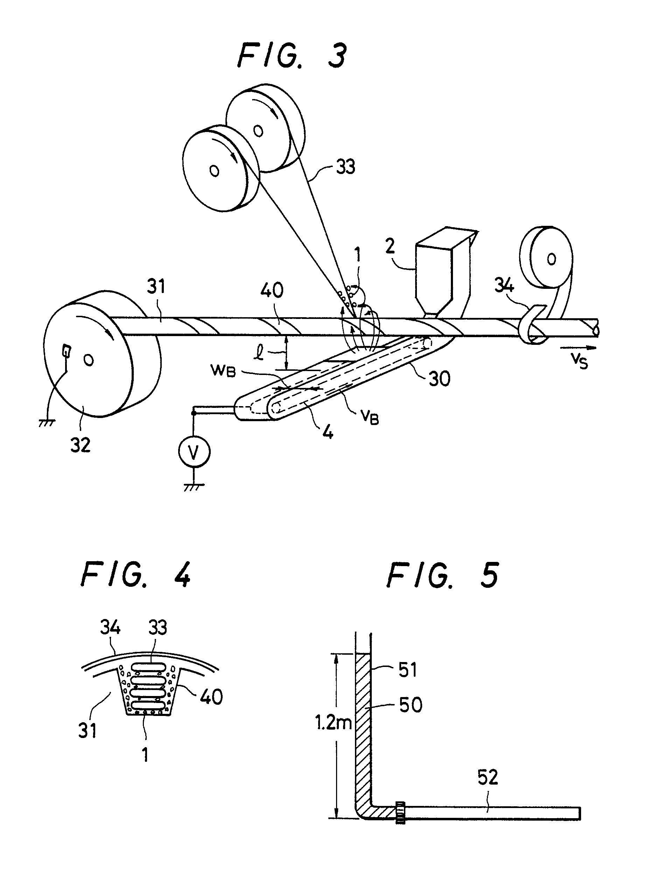

Fig. 3 is a view for explaining a general arrangement of a manufacturing line of a waterproof optical cable to which the manufacturing method according to the present invention is applied. A charged powder application apparatus 30 similar to that in Fig. I is used in the illustrated embodiment. A spacer 3I is unwound from a feed drum 32 and fed to an assembling line. A tape type coated optical fiber 33 is received into a groove of the spacer 3I and thus wound on the spacer. Only one groove and one winding apparatus is illustrated in Fig. 3 although more can be used. An external winding tape 34 made of water-absorbing swelling material is wound over an outer circumference of the spacer 3I after the tape type coated optical fibers 33 have been received in the grooves of the spacer 3I.

A rigid body of the spacer 3I is grounded, and the spacer 3I is fed to the assembling step. The charged powder application apparatus 30 is disposed just under a portion where the tape type coated optical fibers 33 are to be received in the grooves of the spacer 3I. The powder I of water-absorbing swelling material is charged so as to make it adhere to the tape type coated optical fibers 33 and the spacer 3I. Immediately after the adhering of the powder I, the external winding tape 34 of water-absorbing swelling material is wound over the outer circumference of the spacer 3I in this step.

Examples of the powder I according to the present invention include: cross-linking polyacrylate or poly(metal acrylate); starch; graft polymer of acrylic acid; polymer of acrylate, acrylic acid and acrylonitrile; graft polymer of starch and acrylonitrile; a copolymer of vinyl acetate and acrylate or metal acrylate; a copolymer of isobutylene and maleic anhydride; powder or fibers of a CMC- (Carboxymethyl-Cellulose) cross-linking material; and so on. Examples of the external winding tape 34 wound on the spacer 3I include a tape on which powder of the same material to be used for the powder I is attached, a tape made of fibers of the same material, and so on.

An example of the waterproof optical cable manufactured by the method according to the present invention will be described hereunder.

The powder I was prepared by cutting fibers of a polymer of acrylate, acrylic acid and acrylonitrile to a 0.4 mm length. The powder I was put in the hopper 2 so as to be fed therefrom. A 25 mm wide and 0.3 mm thick water-absorbing tape made of fibers of the same material as the powder I was used as the external winding tape 34. A spacer 3I of polyethylene was used which had an outer diameter of 9 mm and five spiral grooves, each having a width of I.98 mm and a depth of 2.06 mm. A rigid conductive body having a diameter of I.2 mm was provided axially at a radial center of the spacer 3I and was grounded at an end of the feeding drum 32 for the spacer 3I. Then, four tape type coated optical fibers 33 were received in each of the grooves of the spacer 3I. The speed $V_s$ for feeding the spacer 3I was set to I0 m per minute. An interval $l$ between the spacer 3I and the belt 4 of the belt convey which electrically charged the powder I was selected to be 4.5 cm and a width $W_B$ of the belt 4 of the belt coveyor was selected to be 4.2 cm. A #I00 wire net sheet was stuck on the surface of the belt 4. The speed $V_B$ of the belt conveyor was set to 0.5 m per minute and the applied voltage was selected to be I2 kV relative to ground. The external winding tape 34 was wound in such a manner as to be superimposed in successive windings by one-fourth of the width of the tape 34. Fig. 4 illustrates a part of the groove structure of the spacer of the waterproof optical cable in the state described above. The spiral groove 40 is formed in the spacer 3I. The waterproof optical cable having such a structure was manufactured by way of test for a 500 m length.

The waterproof optical cable manufactured in a manner as described above was properly cut to prepare 25 samples, each having a length of I meter. All the thus prepared waterproof optical cable samples 52 were subject to a water-exuding test by using such a device as shown generally in Fig. 5. The water-exuding test shown in Fig. 5 was carried out as follows. The I m long sample 52 of the waterproof optical cable manufactured by way of trial was horizontally and tightly inserted into a lower end of a nylon pipe 50 bent at a right angle. Water 5I was poured into the other vertical end of the pipe 50 so that water pressure of an initial I.2 m water head was exerted at the lower end of the pipe 50. The water leaching state was investigated at the other end of the sample waterproof optical cable 52 opposite to the end inserted into the pipe 50. As a result of the water-exuding test, no water exudation was found in all the twenty-five samples.

As described above in the method of manufacturing a water proof optical cable, powder or fibers of water-absorbing swelling material are electrically charged to thereby make the powder or fibers to adhere to a rod-like spacer and/or tape type coated optical fibers by means of electrostatic force, with the following effects.

(i) A small quantity of powder of water-absorbing swelling material can be efficiently applied to the spacer and/or tape type coated optical fibers in comparison with the conventional method in which the powder is sprinkled manually or mechanically.

(ii) The powder can be prevented from scattering in the air so that safety can be secured in view of health maintenance.

(iii) According to the present invention, the powder can be equally applied to the spacer over its circumferential sides at a single time because electrostatic force is used to make the powder adhere to the spacer. This uniform application is unlike the conventional method in which the powder of water-absorbing swelling material is sprinkled so that the powder is applied to the spacer by means of the gravity and therefore, it is impossible to sprinkle the powder to equally adhere to the opposite side of the spacer from the side on to which the powder is sprinkled.

(iv) It is efficient and easy to adjust the quantity of applied powder onto the object by adjusting a voltage of the charged-powder application apparatus for electrically charging the powder, the speed of the belt conveyer in the case of using the belt conveyer system, and so on.

## Claims

1. A method of manufacturing a waterproof optical cable, comprising the steps of:

laying a plurality of optical fibers into at least one spiral groove formed on an outer circumference of a rod-like spacer;

electrifying a powder of water-absorbing swelling material; and

adhering said electrified powder to said optical fibers by means of electrostatic force.

2. method of manufacturing a waterproof optical cable as recited in Claim I, wherein said electrifying step includes contacting said powder with an electrode having an electrical potential difference relative to ground.

3. A method of manufacturing a waterproof optical cable as recited in Claim I, wherein said electrifying step includes contacting said powder with an electrode having a first electrical potential impressed thereupon and wherein said adhering step includes impressing a second electrical potential different from said first electrical potential on said optical fibers.

4. A method of manufacturing a waterproof optical cable as recited in Claim I further including the step of applying an adhesive to said optical fibers and wherein said adhering step adheres said power to optical fibers applied with said adhesive.

5. A method of manufacturing a waterproof optical cable as recited in Claim I, wherein said powder comprises fibers of water-absorbing swelling material.

6. A method of manufacturing a waterproof optical cable as recited in Claim I, wherein said optical fibers are selected from the group of coated optical fibers and a lamination of tape type coated optical fibers.

7. A method of manufacturing a waterproof optical cable, comprising the steps of:

laying a plurality of optical fibers into at least one spiral groove formed on an outer circumference of a rod like spacer;

electrifying a powder of water-absorbing swelling material; and

adhering said electrified powder to said rod-like spacer by electrostatic force.

8. A method of manufacturing a waterproof optical cable as recited in Claim 7, further comprising the step of applying an adhesive to said rod-like spacer and wherein said adhering step adheres said powder to said rod-like space applied with said adhesive.

9. A method of manufacturing a waterproof optical cable as recited in Claim 7, wherein said powder comprises fibers of water-absorbing selling material.

10. A method of manufacturing a waterproof optical cable as recited in Claim 7, wherein said spacer includes a conductor and wherein said adhering step includes applying to said conductor the same electrical potential as an electrical potential used in said electrifying step.

11. An apparatus for manufacturing a waterproof optical cable, comprising:

means for winding a plurality of optical fibers into at least one spiral groove formed in an outer circumference of a rod-like spacer;

means for disposing a powder of water-absorbing swelling material adjacent either said optical fibers or said spacer; and

means for charging said disposed powder, whereby said powder is propelled by an electrostatic force.

12. An apparatus as recited in Claim II, wherein said disposing means includes a conductive conveyor belt conveying said powder and wherein said charging means applies an electrical potential to said belt.

13. An apparatus as recited in Claim II, wherein said disposing means includes means for providing a stream of air mixed with said powder and wherein said charging means includes a charged electrode disposed in said stream.

# FIG. 1

# FIG. 2

# FIG. 3

# FIG. 4

# FIG. 5

| Category | Citation of document with indication, where appropriate, of relevant passages | Relevant to claim | CLASSIFICATION OF THE APPLICATION (Int. Cl.4) |
|---|---|---|---|
| | **DOCUMENTS CONSIDERED TO BE RELEVANT** | | EP 87111999.6 |
| Y | US - A - 4 401 366 (HOPE) <br> * Column 1, line 38 - column 3, line 5; fig. 1-3 * | 1,2,3, 4,7,11, 13 | G 02 B 6/44 <br> H 01 B 13/32 |
| Y | DE - A1 - 2 712 820 (NORTHERN TELECOM) <br> * Fig. 1,2; claim 4; page 10, lines 9-22 * | 1,2,4, 7,11, 13 | |
| A | | 3 | |
| Y | DE - B2 - 2 240 007 (LES CABLES) <br> * Totality * | 1,3,7, 11 | |
| A | US - A - 4 100 002 (WOYTIUK et al.) <br> * Abstract; fig. 1-3 * | 1,7,11 | |
| A | DE - A1 - 3 127 961 (SIEMENS) <br> * Claims 1,4; page 3, line 31 - page 4, line 27 * | 1,7 | **TECHNICAL FIELDS SEARCHED (Int. Cl.4)** <br> G 02 B <br> H 01 B <br> B 05 B |
| P,A | AU - B - 21 965/83 (SUMITOMO ELECTRIC) <br> * fig. 3-5; claims 7,8 * <br> & AU-A1-21 965/83 (13.06.85) | 1,6 | |
| A | EP - A1 - 0 174 424 (NIPPON) <br> * Claims 1-9; fig. 1-4 * | 5,9 | |

The present search report has been drawn up for all claims

| Place of search | Date of completion of the search | Examiner |
|---|---|---|
| VIENNA | 26-11-1987 | GRONAU |

European Patent Office

**EUROPEAN SEARCH REPORT**

Application number

EP 87111999.6

| | DOCUMENTS CONSIDERED TO BE RELEVANT | | |
|---|---|---|---|
| Category | Citation of document with indication. where appropriate, of relevant passages | Relevant to claim | CLASSIFICATION OF THE APPLICATION (Int Cl 4) |
| A | <u>US - A - 4 011 991</u> (MASUDA)<br>* Fig. 1,2,4,6 *<br>-- | 13 | |
| A | <u>DE - C2 - 1 577 944</u> (KÜHN)<br>* Fig. 1,2 *<br>---- | 12 | |

TECHNICAL FIELDS SEARCHED (Int. Cl 4)

The present search report has been drawn up for all claims

| Place of search<br>VIENNA | Date of completion of the search<br>26-11-1987 | Examiner<br>GRONAU |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82